# EUROPÄISCHE PATENTSCHRIFT

(11) **EP 3 059 608 B1**
(45) Veröffentlichungstag und Bekanntmachung des Hinweises auf die Patenterteilung: **30.11.2016**
(21) Anmeldenummer: 15155879.8
(22) Anmeldetag: 20.02.2015
(51) Int. Cl.: G01S 7/486, G01S 7/497, G01S 17/42

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DESTINÉ À LA DÉTECTION D'OBJETS

(43) Veröffentlichungstag der Anmeldung: 24.08.2016
(73) Patentinhaber: SICK AG, 79183 Waldkirch (DE)
(72) Erfinder: Jachmann, Fabian, 79102 Freiburg (DE)
(74) Vertreter: Hehl, Ulrich

(56) Entgegenhaltungen:
- EP-A1- 2 182 377
- DE-A1-102007 013 714
- US-A1- 2006 157 646
- US-B1- 6 919 716

## Beschreibung

Die Erfindung betrifft einen optoelektronischen Sensor und ein Verfahren zur Erfassung von Objekten in einem Überwachungsbereich nach dem Oberbegriff von Anspruch 1, beziehungsweise 10.

Eine häufige Aufgabe bei der Erfassung von Objekten mit einem optoelektronischen Sensor ist die Abstandsbestimmung. Dazu sind seit längerem Lichtlaufzeitverfahren bekannt, in denen Lichtsignale ausgesandt werden und die Zeit bis zum Empfang der an Objekten remittierten oder reflektierten Lichtsignale gemessen wird. Aufgrund der konstanten Ausbreitungsgeschwindigkeit des Signals lässt sich die Signallaufzeit unmittelbar in eine Entfernung umrechnen.

Voraussetzung für eine genaue Signallaufzeitmessung ist die präzise Bestimmung des Empfangszeitpunkts. Dazu sind verschiedene Verfahren bekannt. Bei einem Phasenverfahren wird ein periodisch moduliertes Signal ausgesandt und die Phasenverschiebung zwischen ausgesandtem und empfangenem Signal bestimmt. Ein Pulsverfahren verwendet ein Signal, das eine genaue zeitliche Zuordnung zulässt. Die Erfassung erfolgt hier im einfachsten Fall durch Komparatorschwellen, bei aufwändigeren Verfahren wird das gesamte Empfangssignal abgetastet und digital ausgewertet, um den Empfangspuls zu lokalisieren. Ein Pulsmittelungsverfahren sendet eine Vielzahl von Sendepulsen und wertet die daraufhin empfangenen Pulse statistisch aus. Ein besonders effizientes und genaues Mittelungsverfahren für einen eindimensionalen Entfernungstaster wird in der DE 10 2007 013 714 A1 vorgestellt. Die WO 2012 084 298 A1 befasst sich mit einem entsprechenden Laserscanner.

Ein großes Problem bei der optischen Distanzmessung stellt die hohe Dynamik des Empfangssignals dar. Der Empfangspegel schwankt vor allem wegen zwei Einflussfaktoren erheblich, nämlich dem Remissionsgrad des angetasteten Objekts und dem Objektabstand. Der Remissionsgrad kann für ein schwarzes Ziel im Bereich weniger Prozent, für einen Retroreflektor sogar oberhalb von hundert Prozent liegen. Über den Abstand fällt der Empfangspegel bei einem Lambert'schen Ziel quadratisch ab. Daraus ergibt sich ein Dynamikbereich, der viele Größenordnungen umspannt.

Unterschiedliche Remissionsgrade erhöhen nicht nur den Dynamikbereich, sondern verzerren auch die Form des Empfangssignals. Deshalb wird üblicherweise eine Farb- oder Pegelkorrektur des gemessenen Abstands in Abhängigkeit des tatsächlichen Remissionsgrads eines erfassten Objekts vorgenommen, die aber voraussetzt, dass der Empfangspegel bekannt ist. Eine entsprechende Pegelmessung würde eine Abtastung des Empfangssignals zumindest mit mehreren Schwellen oder einem A/D-Wandler mit ausreichender Bittiefe erfordern, die aber gegenüber üblichen einfachen Schwellenverfahren oder dem auf einer Binarisierung beruhenden Pulsmittelungsverfahren gemäß DE 10 2007 013 714 A1 technisch aufwändig sind.

Im Stand der Technik sind verschiedene Ansätze bekannt, um mit dem großen Dynamikbereich umzugehen. Denkbar ist die Verwendung nichtlinearer oder logarithmischer Verstärker, die aber für die geforderte Verarbeitung von Pulsen im Nanosekundenbereich mit ausreichender Bandbreite nicht zur Verfügung stehen. Die EP 1 990 657 A1 versucht eine nichtlineare Dämpfung über die Kennlinie einer PIN-Diode einzuführen, was aber zu technischen Anpassungsschwierigkeiten mit dem nachgeordneten Verstärker führt.

In der EP 2 182 377 A1 wird der Dynamikbereich auf mehrere Empfangskanäle mit komplementären Verstärkungsbereichen aufgeteilt. Es bedeutet aber einen erheblich erhöhten Hardwareaufwand, wenn zumindest zwei Empfangskanäle mit hoher zeitlicher Auflösung abgetastet werden müssen.

In der noch nicht veröffentlichten deutschen Patentanmeldung mit dem Aktenzeichen 10 2014 102 209 wird ein zusätzlicher Empfangskanal dadurch realisiert, dass der Spannungseinbruch in der Versorgung des Lichtempfängers während des Empfangs eines Lichtsignals als zusätzliches Messsignal verwendet wird. Auch dieses Signal muss aber mit hoher zeitlicher Auflösung erfasst werden, so dass der Hardwareaufwand gegenüber zwei klassischen, reinen Empfangskanälen nicht ausreichend reduziert ist.

Aus der US 6 919 716 B1 ist eine genaue Überwachung des Photostroms einer APD in einem optischen Kommunikationssystem bekannt. Dazu wird ein Wilson-Stromspiegel an die APD angeschlossen, um deren Photostrom zu spiegeln.

In der US 2006/0157646 A1 wird ein optischer Empfänger mit einer APD beschrieben, an die ebenfalls ein Stromspiegel angeschlossen wird. Auf diese Weise wird der Photostrom überwacht, um die Vorspannung der APD bei zu hohen Strömen abzusenken.

Es ist daher Aufgabe der Erfindung, die genaue Auswertung eines Empfangssignals eines Lichtempfängers zu vereinfachen.

Diese Aufgabe wird durch einen optoelektronischen Sensor und ein Verfahren zur Erfassung von Objekten in einem Überwachungsbereich nach Anspruch 1 beziehungsweise 10 gelöst. Der Sensor sendet in üblicher Weise ein Lichtsignal aus, wandelt das zurückkehrende Lichtsignal in einem Lichtempfänger, insbesondere einer APD (Avalanche Photo Diode), in ein elektrisches Empfangssignal und wertet dieses aus. Die Erfindung geht von dem Grundgedanken aus, dabei auch den Empfangspegel zu bestimmen, und zwar gerade nicht aus dem Empfangssignal des Lichtempfängers. Stattdessen wird eine Messinformation in einer regelmäßig ohnehin vorgesehenen Zusatzschaltung für den Betrieb des Lichtempfängers genutzt, um den Empfangspegel zu bestimmen.

Die Erfindung hat den Vorteil, dass der Dynamikbereich auf besonders kostengünstige Weise erweitert wird. Es ist in der Zusatzschaltung mit sehr einfachen Mitteln möglich, Messinformationen zu gewinnen, aus denen der Empfangspegel bestimmt werden kann. Die eigentliche Messung im Empfangskanal anhand des Signals des Lichtempfängers bleibt davon völlig unberührt, kann aber natürlich auf Basis des Empfangspegels korrigiert und so in ihrer Genauigkeit verbessert werden.

Die Zusatzschaltung weist bevorzugt eine Spannungsversorgung des Lichtempfängers auf. Dabei handelt es sich insbesondere im Falle einer APD als Lichtempfänger um eine Hochspannungsversorgung. Als Messinformation wird dann vorzugsweise die Beanspruchung dieser Spannungsversorgung während des Empfangs von Lichtsignalen gewonnen.

Die Zusatzschaltung weist bevorzugt einen Kondensator zum Bereitstellen von Ladung für Pulsantworten des Lichtempfängers auf. Diese Parallelkapazität stellt also die nötige Energie für Pulsantworten bei einem Einzelpulsverfahren oder einem Pulsmittelungsverfahren bereit. Hierbei wird als Messinformation vorzugsweise die während des Empfangs von Lichtsignalen abfließende Ladung beziehungsweise der entsprechende Strom gemessen.

Die Auswertungseinheit ist bevorzugt dafür ausgebildet, den Empfangspegel mit einem erwarteten Empfangspegel eines Reflektors zu vergleichen. Das kann beispielsweise durch einen Schwellenvergleich mit einer Schwelle geschehen, die anhand eines typischen Reflektorsignals gesetzt oder eingelernt wird. Es ist dann denkbar, den Empfangspegel lediglich binär zu bestimmen, nämlich ob es sich bei dem angetasteten Objekt um einen Reflektor handelt oder nicht. Das kann im Übrigen auch für sich schon eine wertvolle Objektinformation sein, die ausgegeben oder anderweitig genutzt wird, beispielsweise wenn Reflektoren als Marker verwendet werden.

An die Zusatzschaltung ist bevorzugt eine Strommesseinheit angeschlossen. Die Messinformation, aus welcher der Empfangspegel gewonnen wird, ist dann der Strom, der fließt, während der Lichtempfänger das Lichtsignal empfängt. Eine besonders kostengünstige und zugleich zuverlässige Möglichkeit der Strommessung ist mit einem Shunt-Widerstand möglich.

Die Auswertungseinheit ist bevorzugt dafür ausgebildet, mit Hilfe des Empfangssignals einen Empfangszeitpunkt des Lichtsignals und so mittels Lichtlaufzeitverfahren einen Abstand des Objekts zu bestimmen. Damit ist der Abstand die zu bestimmende Objektinformation oder zumindest eine der zu bestimmenden Objektinformationen. Obwohl prinzipiell alle bekannten Lichtlaufzeitverfahren denkbar sind, eignet sich die Erfindung besonders im Zusammenhang mit einem Pulsverfahren und insbesondere einem Pulsmittelungsverfahren.

Die Auswertungseinheit ist bevorzugt dafür ausgebildet, bei der Bestimmung des Abstands eine Korrektur anhand des Empfangspegels vorzunehmen. Dazu ist der Auswertungseinheit eine Beziehung zwischen Empfangspegeln und Abstandskorrekturen bekannt, beispielsweise in Form einer Tabelle. Denkbar ist auch, lediglich einen festen Korrekturwert für die Erfassung von Reflektoren zu verwenden.

Die Auswertungseinheit ist bevorzugt dafür ausgebildet, in Abhängigkeit des Empfangspegels den Auswertungsalgorithmus für das Lichtlaufzeitverfahren auszuwählen. Der Empfangspegel ist dann also nicht lediglich ein Korrekturparameter, sondern es findet ein Wechsel des Auswertungsalgorithmus' statt. Beispielsweise wird zwischen einem Auswertungsalgorithmus für reflektierende und nicht reflektierende Objekte gewechselt. So kann der Empfangszeitpunkt für nicht reflektierende Objekte an einem anderen Charakteristikum festgemacht werden als für reflektierende Objekte, etwa an einer Flanke statt an einer Nullstelle.

Die Auswertungseinheit ist bevorzugt dafür ausgebildet, eine Vielzahl von Lichtpulsen auszusenden und die daraufhin erzeugten Empfangssignale zu mitteln. Es wird also ein Pulsmittelungsverfahren eingesetzt, insbesondere mit spezieller analoger Vorverarbeitung und nur binärer Erfassung der Empfangssignale, wie beispielsweise in der DE 10 2007 013 714 A1 oder der WO 2012 084 298 A1 beschrieben.

An die Zusatzschaltung ist bevorzugt mindestens mittelbar ein Tiefpass angeschlossen, mit dessen Hilfe die Messinformationen gemittelt erfasst werden. Das eignet sich vorzugsweise dann, wenn das Auswertungsverfahren ein Pulsmittelungsverfahren ist, da der Empfangspegel dann nur vergleichsweise langsam über einen größeren Zeitraum und mehrere Einzelpulse gemessen werden muss. Die Zeitkonstante des Tiefpasses ist vorteilhafterweise an die Messperiode anzupassen, also diejenige Periode, innerhalb derer ein Abstandsmesswert bestimmt wird, und nicht an die kürzere Periode der zu einer Pulsmittelung beitragenden Einzelpulse. Dadurch ist keine hoch zeitaufgelöste Erfassung der Messinformationen für den Empfangspegel nötig, es genügt eine wesentlich kostengünstigere Abtastung je Messperiode

Vorzugsweise ist eine Testschaltung vorgesehen, die ein künstliches Testsignal in die Zusatzschaltung beziehungsweise die Strommesseinheit einspeist, welches einem hohen Empfangspegel entspricht. Das Testsignal ist insbesondere ein künstliches Reflektorsignal. Damit kann die Auswertungseinheit prüfen, ob die Bestimmung des Empfangspegels zuverlässig arbeitet, was in Anwendungen der Sicherheitstechnik für die notwendige Ausfallsicherheit sorgt. Zum Test der Strommesseinheit für den Einsatz in der Sicherheitstechnik kann auch ein hoch reflektierendes Referenzziel verwendet werden, das sich in einem Winkelbereich des Scans befindet, der nicht zur Auswertung der sicherheitsrelevanten Messdaten verwendet wird.

Der Sensor ist vorzugsweise als Laserscanner mit einer Ablenkeinheit ausgebildet, mittels derer der Lichtstrahl den Überwachungsbereich periodisch abtastet. Laserscanner sind für eine Flächenüberwachung bewährt, und wegen des großen Überwachungsbereichs ist die Wahrscheinlichkeit besonders hoch, auf reflektierende oder zumindest stark remittierende Objekte zu stoßen.

Das erfindungsgemäße Verfahren kann auf ähnliche Weise weitergebildet werden und zeigt dabei ähnliche Vorteile. Dabei wird die Messinformation bevorzugt kostengünstig und zuverlässig über eine Strommessung mittels Shunt-Widerstand in der Zusatzschaltung und/oder nach Tiefpassfilterung gewonnen. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners;
- Fig. 2: ein Blockdiagramm des Empfangskanals und einer Zusatzschaltung mit Empfangspegelmessung in dem Laserscanner nach Figur 1; und
- Fig. 3: ein beispielhafter zeitlicher Verlauf eines Empfangssignals in dem Laserscanner nach Figur 1 zur Erläuterung eines Wechsels des Auswerteverfahrens je nach Empfangspegel.

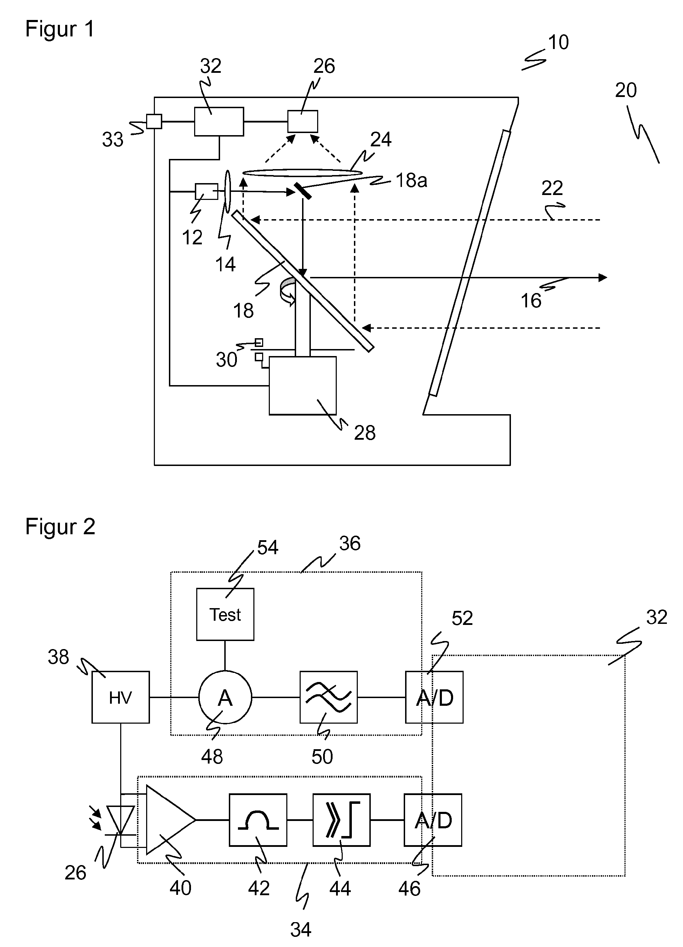

Figur 1 zeigt eine schematische Schnittdarstellung durch einen Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird über einen Spiegel 18a und eine bewegliche Ablenkeinheit 18 in einen Überwachungsbereich 20 ausgesandt und dort von einem gegebenenfalls vorhandenen Objekt remittiert. Das remittierte Licht 22 gelangt wieder zu dem Laserscanner 10 zurück und wird dort über die Ablenkeinheit 18 mittels einer Empfangsoptik 24 von einem Lichtempfänger 26 detektiert, beispielsweise einer Photodiode oder für höhere Empfindlichkeit einer Lawinenphotodiode (APD).

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

Eine Auswertungseinheit 32 ist mit dem Lichtsender 12, dem Lichtempfänger 26, dem Motor 28 und der Winkelmesseinheit 30 verbunden. Die Auswertungseinheit 32 misst die Lichtlaufzeit zwischen Aussenden des Sendelichtstrahls 16 und Empfang von remittiertem Licht 22, um unter Verwendung der Lichtgeschwindigkeit auf die Entfernung eines angetasteten Objektes von dem Laserscanner 10 zu schließen. Die jeweilige Winkelstellung, unter welcher dabei der Sendelichtstrahl 16 ausgesandt wurde, ist der Auswertungseinheit von der Winkelmesseinheit 30 bekannt. Dabei sind die Lichtlaufzeiten gegenüber üblichen Drehfrequenzen der Ablenkeinheit 18 vernachlässigbar, so dass der Sendelichtstrahl 16 praktisch unter demselben Winkel ausgesandt wie zugehöriges remittiertes Licht 22 empfangen wird.

Somit stehen nach jeder Scanperiode über den Winkel und die Entfernung zweidimensionale Polarkoordinaten aller Objektpunkte in dem Überwachungsbereich 20 zur Verfügung. Damit sind die Objektpositionen beziehungsweise Objektkonturen bekannt und können über eine Schnittstelle 33 übertragen oder am Laserscanner 10 angezeigt werden. Die Schnittstelle 33 kann umgekehrt auch als Parametrierschnittstelle dienen, über welche der Auswertungseinheit 32 Daten eingespielt werden können. Alternativ kann eine eigene Parametrierschnittstelle vorgesehen sein. Der Laserscanner 10 ist in einem Gehäuse untergebracht, welches eine umlaufende Frontscheibe aufweist.

Es sind auch Laserscanner 10 bekannt, die anders aufgebaut sind als in Figur 1 dargestellt. Ohnehin ist ein Laserscanner nur ein Beispiel für einen erfindungsgemäßen optoelektronischen Sensor.

Der Laserscanner 10 kann insbesondere in der Sicherheitstechnik zur Überwachung einer Gefahrenquelle eingesetzt werden, wie sie beispielsweise eine gefährliche Maschine darstellt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Für solche Anwendungen in der Sicherheitstechnik kann die Schnittstelle 33 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere der Frontscheibe 38, und/oder Vorsehen von einzelnen Testzielen mit definierten Reflexionsgraden, die unter den entsprechenden Scanwinkeln erkannt werden müssen.

Figur 2 zeigt ein Blockdiagramm des Empfangspfades des Laserscanners 10, von dem in Figur 1 vereinfachend nur der Lichtempfänger 26 und die Auswertungseinheit 32 dargestellt sind. In der Ausführungsform gemäß Figur 2 ist die eigentliche Auswertungseinheit 32 digital implementiert, beispielsweise auf einem FPGA (Field Programmable Gate Array) oder einem vergleichbaren Baustein. Zur Auswertungseinheit kann aber auch ein analoger Vorverarbeitungspfad 34 sowie eine Empfangspegelbestimmungseinheit 36 gehören. Prinzipiell ist alternativ eine einfache analoge Auswertung beispielsweise durch Schwellwertvergleich möglich.

Eine Spannungsversorgung 38 versorgt den Lichtempfänger 26 und ist ein Beispiel für eine Zusatzschaltung für den Betrieb des Lichtempfängers 26. An die Spannungsversorgung ist auch die Empfangspegelbestimmungseinheit 36 angeschlossen. Die Empfangspegelbestimmungseinheit 36 arbeitet also gerade nicht mit dem Empfangssignal des Lichtempfängers 26.

Die Lichtlaufzeit kann in der Auswertungseinheit 32 mit jedem bekannten Verfahren gemessen werden. Bevorzugt ist ein Pulsmittelungsverfahren, bei dem Empfangssignale zu einer Vielzahl von ausgesandten Einzelpulsen gesammelt und aufaddiert werden. Das sorgt für ein verbessertes Signal-Rausch-Verhältnis. Außerdem ist es im Zusammenhang mit der erfindungsgemäßen Empfangspegelmessung mit Hilfe der Spannungsversorgung 38 vorteilhaft, weil dann der Empfangspegel vergleichsweise langsam gemessen werden kann, denn in der Regel genügt es, den mittleren Empfangspegel während der Bestimmung eines Abstandswerts zu kennen.

Figur 2 zeigt als ein Beispiel den Empfangspfad für ein spezielles Pulsmittelungsverfahren ähnlich demjenigen, das in der DE 10 2007 013 714 A1 oder der WO 2012 084 298 A1 beschrieben ist, und hierauf wird für ergänzende Erklärungen verwiesen. Für andere Lichtlaufzeitverfahren kann auf den analogen Vorverarbeitungspfad 34 verzichtet beziehungsweise dieser durch eine einfache Verstärkung ersetzt werden.

Der analoge Vorverarbeitungspfad 34 umfasst einen Vorverstärker 40, einen Filter 42 und einen Begrenzungsverstärker 44 sowie als Übergang zu der digitalen Auswertungseinheit 32 einen A/D-Wandler 46. Vorverstärker 40 und Filter 42 können auch vertauscht angeordnet sein. Der beispielsweise als Transimpedanzverstärker ausgestaltete Vorverstärker 40 erzeugt aus dem Photostrom des Lichtempfängers 26 ein entsprechend vorverstärktes Spannungssignal. Jeder Einzelpuls des Pulsmittelungsverfahrens ist als Lichtsignal stets unipolar. Das entsprechende unipolare Empfangssignal des Lichtempfängers 26 wird durch das Filter 42, beispielsweise ein Bandpassfilter, in ein bipolares Schwingungssignal gewandelt, das anschließend von dem Begrenzungsverstärker 44 in die Sättigung hinein verstärkt und abgeschnitten wird. Deshalb genügt zur Digitalisierung ein als Binarisierer ausgebildeter A/D-Wandler 46, der durch einfache Komparatoren insbesondere in den Eingängen eines FPGAs der digitalen Auswertungseinheit 32 umgesetzt sein kann. Es entsteht eine Bitfolge entsprechend der Amplitude des Empfangssignals. Durch Aufaddieren von Messwiederholungen wird daraus ein digitales gemitteltes Empfangssignal. Dieses Aufaddieren der Bitfolgen kann auch als Akkumulieren von Ereignissen in einem Histogramm ausgedrückt werden, welches im Laufe der Wiederholungen das gemittelte Empfangssignal diskret wiedergibt. Der Vorteil dieser Implementierung des Lichtlaufzeitverfahrens ist, dass extrem kostengünstige Bauteile eingesetzt werden und das gemittelte Empfangssignal selbst dann noch eine robuste Erkennung des Empfangszeitpunkts zulässt, wenn ein einzelner Empfangspuls gar keine erkennbaren Unterschiede zwischen Nutzsignal und Rauschen hat.

Die Empfangspegelbestimmungseinheit 36 misst im in Figur 2 dargestellten Beispiel in der Spannungsversorgung 38 den mittleren Strom, der fließt, während der Lichtempfänger 26 das remittierte Licht 22 empfängt. Je nach Sendeleistung liegt dieser Strom gerade bei Reflektortargets um ein bis zwei Größenordnungen über den Werten, die indirektes Fremdlicht verursachen, und ermöglicht deshalb eine einfache Unterscheidung. Prinzipiell kann auch eine andere Größe bestimmt werden, die mit dem Empfangspegel zusammenhängt.

Dazu ist eine Strommesseinheit 48 für die Spannungsversorgung 38 vorgesehen, die besonders kostengünstig als Spannungsmessung an einem niederohmigen Messwiderstand realisiert sein kann (Shunt-Widerstand). Das Signal der Strommesseinheit 48 wird über einen Tiefpassfilter 50 gemittelt. Dessen Zeitkonstante ist vorzugsweise so eingestellt, dass der Strom über eine Messperiode gemittelt wird, also die Periode, in der jeweils Einzelpulse ausgesandt, wieder empfangen und in einem Histogramm gesammelt werden, um einen Abstandswert zu bestimmen. Während das Empfangssignal für die Lichtlaufzeitmessung in dem A/D-Wandler 46 im GHz-Bereich abgetastet werden muss, um die sehr kurzen Lichtlaufzeiten zu erfassen, genügt in der Empfangspegelbestimmungseinheit 36 ein vergleichsweise langsamer A/D-Wandler 52 beispielsweise von 10-50 kHz, da der Empfangspegel nur gemittelt über die Einzelpulse eine Abstandsmessung bekannt sein muss.

Insbesondere für Anwendungen in der Sicherheitstechnik ist noch eine Testgeneratorschaltung 54 vorgesehen, die auf entsprechende Ansteuerung ein künstliches Testsignal erzeugt, welches in seinem Pegel einem Objekt mit bestimmten Reflexionseigenschaften entspricht, etwa einem Reflektor. Dies muss für den Nachweis einer einwandfreien Funktion als Reflektorsignal erkannt werden.

Die Empfangspegelbestimmungseinheit 36 stellt also der Auswertungseinheit 32 zusätzlich zu dem eigentlichen Empfangssignal aus dem Lichtempfänger 26 beziehungsweise dem Vorverarbeitungspfad 34 den Empfangspegel zur Verfügung. Diesen Empfangspegel verwendet die Auswertungseinheit 36 für eine Farb- oder Pegelkorrektur des Abstandswerts. Dazu ist in der Auswertungseinheit 36 eine Beziehung zwischen Empfangspegel als Maß für den Remissionsgrad des angetasteten Objekts und einer Abstandskorrektur hinterlegt.

In einigen Ausführungsformen ist dafür eine genaue Pegelinformation aus der Empfangspegelbestimmungseinheit 36 gar nicht erforderlich, sondern es soll nur eine Reflektorerkennung stattfinden. Ist ein Reflektor erkannt, insbesondere ein Retroreflektor, so wird der Abstand entsprechend korrigiert und sonst nicht. Die Erkennung des Reflektors kann durch Vergleich mit einem erwarteten Empfangspegel eines Reflektors geschehen, der bereits als Binarisierungsschwelle in dem dann als Komparator ausgebildeten A/D-Wandler 52 eingestellt ist.

Der Empfangspegel kann aber zusätzlich oder alternativ auch für andere Modifikationen der Abstandsmessung genutzt werden als lediglich eine Pegelkorrektur. So ist beispielsweise denkbar, in Abhängigkeit des gemessenen Empfangspegels den Auswertungsalgorithmus auszuwählen. Beispielsweise werden dann Lichtlautzeiten zu Reflektoren anders ausgewertet als zu sonstigen Objekten.

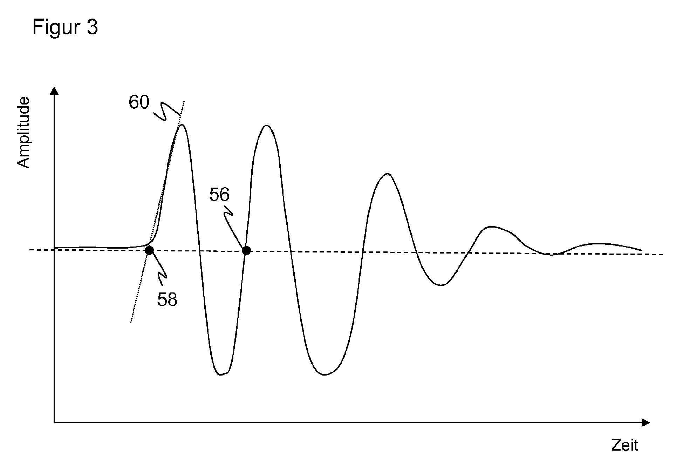

Um dies zu illustrieren, zeigt Figur 3 einen rein beispielhaften zeitlichen Verlauf des Empfangssignals, welches die Auswertungseinheit 32 aus dem analogen Vorverarbeitungspfad 34 erhält. Aufgrund der Schwingung, die durch das Filter 42 erzeugt wird, ist die Gestalt des Empfangssignals nicht einfach eine verzerrte Wiederholung des Sendepulses, sondern bildet grob ein Sinussignal mit abklingender Amplitude. Das Empfangssignal bietet eine Vielzahl von Charakteristika wie Nullstellen, Extrema oder Wendepunkte, an denen der Empfangszeitpunkt eindeutig festgemacht werden kann. So könnte bei kleinem und moderatem Empfangspegel beispielsweise die Nullstelle 56 herangezogen werden. Wenn aber die Auswertungseinheit 32 anhand des Empfangspegels ohne konkrete Kenntnis dieses Signals schon weiß, dass ein Reflektor erfasst ist, kann es sinnvoll sein, dieses Kriterium zu ändern, beispielsweise um ein Charakteristikum des Empfangssignals zu suchen, das pegelunabhängig ist. Das ist in Figur 3 durch eine Position 58 der durch eine Ausgleichsgrade 60 angedeuteten ersten Flanke des Empfangssignals angedeutet. Der Empfangspegel, hier in binärer Form als Information darüber, ob ein Reflektor angetastet ist, dient also nicht nur als Korrekturparameter, sondern als Schalter zwischen ganz unterschiedlichen Vorgehen bei der Auswertung.

Die Erfindung wurde am Beispiel der Spannungsversorgung 38 als Zusatzschaltung erklärt. Die Zusatzschaltung kann aber auch andere Elemente enthalten. Beispielsweise wird eine APD als Lichtempfänger 26 im Allgemeinen mit einer Parallel-Kapazität betrieben, welche gegen Masse geschaltet ist und die nötige Energie für Pulsanworten bereithält. In dem Fußpunkt zur Masse hin kann ebenfalls eine Strommessung insbesondere mittels Shunt-Widerstand erfolgen. So wird der Strom, insbesondere durch Einsatz eines Tiefpassfilters der Durchschnittsstrom, der Pulse während der Lichtlaufzeitmessung bestimmt. Ein Vorteil ist hierbei, dass dieser Abgriff gleichmäßiges Fremdlicht nicht mit misst und daher ausschließlich das Signal der Pulsströme integriert wird.

## Patentansprüche

1. Optoelektronischer Sensor (10) zur Erfassung von Objekten in einem Überwachungsbereich (20), der einen Lichtsender (12) zum Aussenden eines Lichtsignals in den Überwachungsbereich (20), einen Lichtempfänger (26) zum Umwandeln des von einem Objekt reflektierten oder remittierten Lichtsignals (22) in ein elektrisches Empfangssignal, eine Zusatzschaltung (38) für den Betrieb des Lichtempfängers (26) und eine Auswertungseinheit (32) aufweist, die dafür ausgebildet ist, mit Hilfe des Empfangssignals einen Empfangszeitpunkt des Lichtsignals und so mittels Lichtlaufzeitverfahren einen Abstand des Objekts zu bestimmen,
**dadurch gekennzeichnet,**
**dass** die Auswertungseinheit (32) dafür ausgebildet ist, einen Empfangspegel des Empfangssignals aus Messinformationen in der Zusatzschaltung (36, 38) zu bestimmen und anhand des Empfangspegels bei der Bestimmung des Abstands eine Korrektur vorzunehmen oder in Abhängigkeit des Empfangspegels den Auswertungsalgorithmus für das Lichtlaufzeitverfahren auszuwählen.

2. Sensor (10) nach Anspruch 1,
wobei die Zusatzschaltung (38) eine Spannungsversorgung des Lichtempfängers (26) aufweist.

3. Sensor (10) nach Anspruch 1 oder 2,
wobei die Zusatzschaltung (38) einen Kondensator zum Bereitstellen von Ladung für Pulsantworten des Lichtempfängers (26) aufweist.

4. Sensor (10) nach einem der vorhergehenden Ansprüche,
wobei die Auswertungseinheit (32, 52) dafür ausgebildet ist, den Empfangspegel mit einem erwarteten Empfangspegel eines Reflektors zu vergleichen.

5. Sensor (10) nach einem der vorhergehenden Ansprüche,
wobei an die Zusatzschaltung (38) eine Strommesseinheit (48) angeschlossen ist, insbesondere mit einem Shunt-Widerstand.

6. Sensor (10) nach einem der vorhergehenden Ansprüche,
wobei die Auswertungseinheit (32) dafür ausgebildet ist, eine Vielzahl von Lichtpulsen auszusenden und die daraufhin erzeugten Empfangssignale zu mittein.

7. Sensor (10) nach einem der vorhergehenden Ansprüche,
wobei an die Zusatzschaltung (38) ein Tiefpass (50) angeschlossen ist, mit dessen Hilfe die Messinformationen gemittelt erfasst werden.

8. Sensor (10) nach einem der vorhergehenden Ansprüche,
wobei eine Testschaltung (54) vorgesehen ist, die ein künstliches Testsignal in die Zusatzschaltung (38) einspeist, welches einem hohen Empfangspegel entspricht.

9. Sensor (10) nach einem der vorhergehenden Ansprüche,
der als Laserscanner mit einer Ablenkeinheit (18) ausgebildet ist, mittels derer der Lichtstrahl (16, 22) den Überwachungsbereich (20) periodisch abtastet.

10. Verfahren zur Erfassung von Objekten in einem Überwachungsbereich (20), bei dem ein Lichtsignal (16) in den Überwachungsbereich (20) ausgesandt, ein von einem Objekt reflektiertes oder remittiertes Lichtsignal (22) in einem Lichtempfänger (26) in ein elektrisches Empfangssignal umgewandelt wird, wobei das Empfangssignal ausgewertet wird, um einen Empfangszeitpunkt des Lichtsignals und so mittels Lichtlaufzeitverfahren einen Abstand des Objekts zu bestimmen,
**dadurch gekennzeichnet,**
**dass** ein Empfangspegel des Empfangssignals aus Messinformationen einer Zusatzschaltung (36, 38) zum Betrieb des Lichtempfängers (26) bestimmt wird und dass anhand des Empfangspegels bei der Bestimmung des Abstands eine Korrektur vorgenommen oder in Abhängigkeit des Empfangspegels ein Auswertungsalgorithmus für das Lichtlaufzeitverfahren ausgewählt wird.

11. Verfahren nach Anspruch 10,
wobei die Messinformationen über eine Strommessung (48) mittels Shunt-Widerstand aus der Zusatzschaltung (38) gewonnen wird.

12. Verfahren nach Anspruch 10 oder 11,
wobei die Messinformation nach einer Tiefpassfilterung (50) gewonnen wird.

## Claims

1. An optoelectronic sensor (10) for the detection of objects in a monitoring area (20), the sensor (10) comprising a light transmitter (12) for transmitting a light signal (16) into the monitoring area (20), a light receiver (26) for converting the light signal (22) reflected or remitted by an object into an electrical reception signal, a supplementary circuit (38) for operating the light receiver (26), and an evaluation (32) which is configured to determine a reception point in time of the light signal based on the reception signal and thus a distance of the object with a light time of flight method, **characterized in that**
the evaluation unit (32) is configured to determine a reception level of the reception signal from measurement information in the supplementary circuit (36, 38) and to make a correction based on the reception level during determination of the distance or to select an evaluation algorithm for the light time of flight method in dependence on the reception level.

2. The sensor (10) according to claim 1,
wherein the supplementary circuit (38) comprises a voltage supply of the light receiver (26).

3. The sensor (10) according to claim 1 or 2,
wherein the supplementary circuit (38) comprises a capacitor for providing charge for pulse responses of the light receiver (26).

4. The sensor (10) according to any of the preceding claims,
wherein the evaluation unit (32, 52) is configured to compare the reception level with an expected reception level of a reflector.

5. The sensor (10) according to any of the preceding claims,
wherein a current measuring unit (48) is connected to the supplementary circuit (38), in particular with a shunt resistor.

6. The sensor (10) according to any of the preceding claims,
wherein the evaluation unit (32) is configured to transmit a plurality of light pulses and to average the reception signals which are subsequently generated.

7. The sensor (10) according to any of the preceding claims,
wherein a low pass filter (50) is connected to the supplementary circuit (38), by means of which the measurement information is detected in an averaged manner.

8. The sensor (10) according to any of the preceding claims,
wherein a test circuit (54) is provided, which feeds an artificial test signal into the supplementary circuit (38) corresponding to a high reception level.

9. The sensor (10) according to any of the preceding claims,
which is configured as a laser scanner having a deflection unit (18) by means of which the light signal (16, 22) periodically scans the monitoring area (20).

10. A method for the detection of objects in a monitoring area (20), wherein a light signal (16) is transmitted into the monitoring area (20) and a light signal (22) reflected or remitted by an object is converted into an electrical signal in a light receiver (26), wherein the reception signal is evaluated to determine a reception point in time of the light signal based on the reception signal and thus a distance of the object with a light time of flight method,
**characterized in that** a reception level of the reception signal is determined from measurement information of a supplementary circuit (36, 38) for operating the light receiver (26), and **in that** during determination of the distance a correction is made based on the reception level or an evaluation algorithm for the light time of flight method is selected in dependence on the reception level.

11. The method according to claim 10,
wherein the measurement information is obtained from the supplementary circuit (38) by a current measurement (48) by means of a shunt resistor.

12. The method according to claim 10 or 11,
wherein the measurement information is obtained following a low pass filtering (50).

## Revendications

1. Détecteur optoélectronique (10) destiné à détecter des objets dans une zone à surveiller (20), qui comprend un émetteur de lumière (12) pour émettre un signal lumineux dans la zone à surveiller (20), un récepteur de lumière (26) pour transformer le signal lumineux (22) réfléchi ou réémis par un objet en un signal électrique de réception, un circuit supplémentaire (38) pour le fonctionnement du récepteur de lumière (26) et une unité d'évaluation (32) conçue pour déterminer un instant de réception du signal lumineux à l'aide du signal de réception et ainsi une distance de l'objet par un procédé de temps de parcours de la lumière, **caractérisé en ce que** l'unité d'évaluation (32) est conçue pour déterminer un niveau de réception du signal de réception à partir des informations de mesure dans le circuit supplémentaire (36,38) et pour effectuer une correction lors de la détermination de la distance à partir du niveau de réception ou bien pour choisir l'algorithme d'évaluation pour le procédé de temps de parcours de la lumière en fonction du niveau de réception.

2. Détecteur (10) selon la revendication 1,
dans lequel le circuit supplémentaire (38) comprend une alimentation en tension du récepteur de lumière (26).

3. Détecteur (10) selon la revendication 1 ou 2,
dans lequel le circuit supplémentaire (38) comprend un condensateur pour mettre à disposition une charge pour des réponses impulsionnelles du récepteur de lumière (26).

4. Détecteur (10) selon l'une des revendications précédentes,
dans lequel l'unité d'évaluation (32, 52) est conçue pour comparer le niveau de réception à un niveau de réception attendu d'un réflecteur.

5. Détecteur (10) selon l'une des revendications précédentes,
dans lequel une unité de mesure de courant (48), en particulier pourvue d'une résistance shunt, est connectée au circuit supplémentaire (38).

6. Détecteur (10) selon l'une des revendications précédentes,
dans lequel l'unité d'évaluation (32) est conçue pour émettre une multitude d'impulsions de lumière et pour moyenner les signaux de réception qui en sont générés.

7. Détecteur (10) selon l'une des revendications précédentes,
dans lequel un filtre passe-bas (50) est connecté au circuit supplémentaire (38), à l'aide duquel les informations de mesure sont saisies de façon moyennée.

8. Détecteur (10) selon l'une des revendications précédentes,
dans lequel est prévu un circuit de test (54) qui injecte un signal de test artificiel dans le circuit supplémentaire (38), qui correspond à un niveau de réception élevé.

9. Détecteur (10) selon l'une des revendications précédentes,
qui est réalisé sous forme de scanneur laser pourvu d'une unité de déviation (18) au moyen de laquelle le rayon lumineux (16, 22) balaie périodiquement la zone à surveiller (20).

10. Procédé de détection d'objets dans une zone à surveiller (20), dans lequel un signal lumineux (16) est émis dans la zone à surveiller (20), un signal lumineux (22) réfléchi ou réémis par un objet est transformé en un signal électrique de réception dans un récepteur de lumière (26), le signal de réception étant évalué pour déterminer un instant de réception du signal lumineux et ainsi une distance de l'objet au moyen d'un procédé de temps de parcours de la lumière,
**caractérisé en ce que**
un niveau de réception du signal de réception est déterminé à partir des informations de mesure d'un circuit supplémentaire (36, 38) pour le fonctionnement du récepteur de lumière (26), et à partir du niveau de réception on effectue une correction lors de la détermination de la distance ou bien on choisit un algorithme d'évaluation pour le procédé de temps de parcours de la lumière en fonction du niveau de réception.

11. Procédé selon la revendication 10,
dans lequel on obtient les informations de mesure par une mesure du courant (48) au moyen d'une résistance shunt à partir du circuit supplémentaire (38).

12. Procédé selon la revendication 10 ou 11,
dans lequel on obtient les informations de mesure après un filtrage au filtre passe-bas (50).
